# EUROPEAN PATENT APPLICATION

(11) **EP 3 376 384 A1**
(43) Date of publication of application: **19.09.2018**
(21) Application number: 17305267.1
(22) Date of filing: 13.03.2017
(51) Int. Cl.: G06F 9/50, G06F 1/32

(54) **METHOD FOR OPERATING AN ELECTRONIC DEVICE, AND CORRESPONDING SYSTEM ON CHIP, ELECTRONIC DEVICE, ELECTRONIC ASSEMBLY, COMPUTER READABLE PROGRAM PRODUCT AND COMPUTER READABLE STORAGE MEDIUM**

(71) Applicant: Thomson Licensing, 92130 Issy-les-Moulineaux (FR)
(72) Inventor: JEANNE, Ludovic, 35576 Cesson-Sévigné (FR); LE GAL, Pascal, 35576 Cesson-Sévigné (FR); GRENIER, Frédéric, 35576 Cesson-Sévigné (FR)
(74) Representative: Huchet, Anne

(57) **Abstract**

The present disclosure relates to a method implemented in an electronic device comprising at least two processor cores. In one embodiment, the method comprises varying a maximum number of processor cores used for operating the electronic device, amongst the processor cores, and/or an operating frequency of at least one of the processor cores according to a load of at least one of the processor cores.

The present disclosure also relates to corresponding electronic device, and corresponding System on Chip, electronic device, electronic assembly, computer readable program product and computer readable storage medium.

## Description

### 1. Technical field

The present disclosure relates to the field of electronic devices comprising several processor cores.

A method for operating an electronic device, and corresponding System on Chip, electronic device, electronic assembly, computer readable program product and computer readable storage medium are described.

### 2. Background art

It is often desirable for a user to be equipped with powerful devices, comprising high processing capabilities. This is notably the case in the technical field of audio and/or video processing. Indeed, some services (notably software services) may be very greedy in terms of processing time.

There is need for a solution that permits to control the power consumption of an electronic device during its operation while permitting to offer to a user good processing capabilities.

### 3. Summary

The present principles enable at least one of the above disadvantages to be resolved by proposing a method implemented in an electronic device comprising at least two processor cores.

According to an embodiment of the present disclosure, the method comprises varying a maximum number of processor cores used for operating said electronic device, amongst said processor cores, and/or an operating frequency of at least one of said processor cores according to a load of at least one of said processor cores.

According to an embodiment of the present disclosure, the method comprises varying said maximum number of used processor cores and/or the operating frequency of at least one of said processor cores according to the load of each used processor cores.

According to an embodiment of the present disclosure, the method comprises increasing said maximum number of used processor cores and/or the operating frequency of at least one of the used processor cores when the load of at least one of said used processor cores is more than a first value.

According to an embodiment of the present disclosure, the maximum number of used processor cores and/or the operating frequency of at least one of said used processor cores comprises, when the load of at least one of said used processor cores is more than the first value, keeping the operating frequency of at least one of said used processor cores unchanged when said maximum number of used processor cores is less than the total number of processor cores of said electronic device.

According to an embodiment of the present disclosure, the method comprises decreasing said maximum number of used processor cores and/or the operating frequency of at least one of said used processor cores when the load of at least one of said used processor cores is less than a second value.

According to an embodiment of the present disclosure, the method comprises decreasing said maximum number of used processor cores and/or the operating frequency of at least one of said used processor cores when the load of all used processor cores is less than a second value.

According to an embodiment of the present disclosure, the varying of said maximum number of used processor cores and/or the operating frequency of at least one of said used processor cores comprises, when the load of at least one used processor core is less than the second value, keeping said maximum number of used processor cores unchanged when at least one of the used processor cores is adapted to operate at a frequency lower than its current operating frequency.

According to an embodiment of the present disclosure, the first and/or the second value depends of said maximum number of used processor cores and/or of the current operating frequency of at least one of the currently used processor cores.

According to an embodiment of the present disclosure, the method comprises varying a number of processor cores currently usable for operating said electronic device and/or an operating frequency of at least one of said usable processor cores according to a load of at least one of said usable processor cores.

According to an embodiment of the present disclosure, the method comprises varying the number of processor cores currently usable for operating said electronic device and/or the operating frequency of at least one of said currently usable processor cores according to the load of each of said currently usable processor cores.

According to an embodiment of the present disclosure, said method is performed iteratively.

According to an embodiment of the present disclosure, the method comprises increasing the number of usable processor cores and/or the operating frequency of at least one of the usable processor cores when the load of at least one of said currently usable processor cores is more than a first value.

According to an embodiment of the present disclosure, said varying of the number of usable processor cores and/or the operating frequency of at least one of said usable processor cores comprises, when the load of at least one of said usable processor cores is more than the first value, keeping the operating frequency of at least one of said used processor cores unchanged when the number of currently usable processor cores is less than the total number of processor cores of said electronic device.

According to an embodiment of the present disclosure, the method comprises decreasing the number of usable processor cores and/or the operating frequency of at least one of said usable processor cores when the load of at least one of said usable processor cores is less than a second value.

According to an embodiment of the present disclosure, the method comprises decreasing the number of usable processor cores and/or the operating frequency of at least one of said usable processor cores when the load of all usable processor cores is less than a second value.

According to an embodiment of the present disclosure, said varying of the number of usable processor cores and/or the operating frequency of at least one of said usable processor cores comprises, when the load of each usable processor core is less than the second value, keeping the number of usable processor cores unchanged when at least one of the usable processor cores is adapted to operate at a frequency lower than its current operating frequency.

According to an embodiment of the present disclosure, the first and/or the second value depends of the number of currently usable processor cores and/or of the current operating frequency of at least one of the currently usable processor cores.

According to at least one embodiment, the method comprises limiting a number of cores used for operating the communication device to a third value, lower or equal than a number of cores present in the communication device, and varying said third value and/or an operating frequency of at least one of said processor cores according to a load of at least one of said processor cores.

According to another aspect, the present disclosure relates to a System on Chip (SoC) Component comprising at least two processor cores.

According to an embodiment of the present disclosure, said at least two processor cores are adapted to collectively vary a maximum number of processor cores used for operating said electronic device, amongst said processor cores, and/or an operating frequency of at least one of said processor cores according to a load of at least one of said processor cores.

According to an embodiment of the present disclosure, said at least two processor cores are adapted to collectively vary said maximum number of used processor cores and/or the operating frequency of at least one of said processor cores according to the load of each used processor cores.

According to an embodiment of the present disclosure, said at least two processor cores are adapted to collectively increase said maximum number of used processor cores and/or the operating frequency of at least one of the used processor cores when the load of at least one of said used processor cores is more than a first value.

According to an embodiment of the present disclosure, said at least two processor cores are adapted to collectively to keep, when the load of at least one of said used processor cores is more than the first value, the operating frequency of at least one of said used processor cores unchanged when said maximum number of used processor cores is less than the total number of processor cores of said electronic device.

According to an embodiment of the present disclosure, said at least two processor cores are adapted to collectively decrease said maximum number of used processor cores and/or the operating frequency of at least one of said used processor cores when the load of at least one of said used processor cores is less than a second value.

According to an embodiment of the present disclosure, said at least two processor cores are adapted to collectively decrease said maximum number of used processor cores and/or the operating frequency of at least one of said used processor cores when the load of all used processor cores is less than a second value.

According to an embodiment of the present disclosure, said at least two processor cores are adapted to collectively keep, when the load of at least one used processor core is less than the second value, said maximum number of used processor cores unchanged when at least one of the used processor cores is adapted to operate at a frequency lower than its current operating frequency.

According to an embodiment of the present disclosure, the first and/or the second value depends of said maximum number of used processor cores and/or of the current operating frequency of at least one of the currently used processor cores.

According to another aspect, the present disclosure relates to an electronic device comprising a SoC Component comprising two processor cores.

According to an embodiment of the present disclosure, said at least two processor cores are adapted to collectively vary a maximum number of processor cores used for operating said electronic device, amongst said processor cores, and/or an operating frequency of at least one of said processor cores according to a load of at least one of said processor cores.

According to an embodiment of the present disclosure, said at least two processor cores are adapted to collectively vary said maximum number of used processor cores and/or the operating frequency of at least one of said processor cores according to the load of each used processor cores.

According to an embodiment of the present disclosure, said at least two processor cores are adapted to collectively increase said maximum number of used processor cores and/or the operating frequency of at least one of the used processor cores when the load of at least one of said used processor cores is more than a first value.

According to an embodiment of the present disclosure, said at least two processor cores are adapted to collectively to keep, when the load of at least one of said used processor cores is more than the first value, the operating frequency of at least one of said used processor cores unchanged when said maximum number of used processor cores is less than the total number of processor cores of said electronic device.

According to an embodiment of the present disclosure, said at least two processor cores are adapted to collectively decrease said maximum number of used processor cores and/or the operating frequency of at least one of said used processor cores when the load of at least one of said used processor cores is less than a second value.

According to an embodiment of the present disclosure, said at least two processor cores are adapted to collectively decrease said maximum number of used processor cores and/or the operating frequency of at least one of said used processor cores when the load of all used processor cores is less than a second value.

According to an embodiment of the present disclosure, said at least two processor cores are adapted to collectively keep, when the load of at least one used processor core is less than the second value, said maximum number of used processor cores unchanged when at least one of the used processor cores is adapted to operate at a frequency lower than its current operating frequency.

According to an embodiment of the present disclosure, the first and/or the second value depends of said maximum number of used processor cores and/or of the current operating frequency of at least one of the currently used processor cores.

According to another aspect, the present disclosure relates to an electronic assembly comprising:
- a first electronic device;
- a second electronic device adapted to equip said first electronic device, said second electronic device comprising a SoC Component comprising at least two processor cores.

According to an embodiment of the present disclosure, said at least two processor cores are adapted to collectively vary a maximum number of processor cores used for operating said electronic device, amongst said processor cores, and/or an operating frequency of at least one of said processor cores according to a load of at least one of said processor cores.

While not explicitly described, the System on Chip, the electronic device and /or the electronic assembly of the present disclosure can be adapted to perform the method of the present disclosure in any of its embodiments.

While not explicitly described, the present embodiments related to a method or to the corresponding System on Chip, electronic device and /or electronic assembly of the present disclosure can be employed in any combination or sub-combination.

For example, some embodiments of the method of the present disclosure can involve increasing said maximum number of used processor cores and/or the operating frequency of at least one of said used processor cores when the load of at least one of said used processor cores is more than a first value, the operating frequency being kept unchanged when said maximum number of used processor cores is less than the total number of processor cores of said electronic device, and decreasing said maximum number of used processor cores and/or the operating frequency of at least one of said used processor cores when the load of all used processor cores is less than a second value, said maximum number of used processor cores being kept unchanged when at least one of the used processor cores is adapted to operate at a frequency lower than its current operating frequency.

According to another aspect, the present disclosure relates to a non-transitory program storage product, readable by a computer.

According to an embodiment of the present disclosure, said non-transitory computer readable program product tangibly embodies a program of instructions executable by a computer to perform the method of the present disclosure in any of its embodiments.

According to an embodiment of the present disclosure, said non-transitory computer readable program product tangibly embodies a program of instructions executable by a computer for performing, when said non-transitory software program is executed by a computer, a method implemented in an electronic device comprising at least two processor cores, said method comprising varying a maximum number of processor cores used for operating said electronic device, amongst said processor cores, and/or an operating frequency of at least one of said processor cores according to a load of at least one of said processor cores.

According to another aspect, the present disclosure relates to a computer readable storage medium carrying a software program comprising program code instructions for performing the method of the present disclosure, in any of its embodiments, when said non-transitory software program is executed by a computer.

According to an embodiment of the present disclosure, said computer readable storage medium tangibly embodies a program of instructions executable by a computer for performing, when said non-transitory software program is executed by a computer, a method implemented in an electronic device comprising at least two processor cores, said method comprising varying a maximum number of processor cores used for operating said electronic device, amongst said processor cores, and/or an operating frequency of at least one of said processor cores according to a load of at least one of said processor cores.

### 4. List of drawings.

The present disclosure can be better understood, and other specific features and advantages can emerge upon reading the following description, the description making reference to the annexed drawings wherein:
- Figure 1 shows an example of a system belonging to a wireless communication network according to a particular embodiment of the present disclosure;
- Figure 2 show an exemplary association of the communication device 120 of figure 1 with the TV set 130 of figure 1;
- Figure 3 illustrates a logical structure of a System on Chip 500 equipping the communication device 120 of figure 1;
- Figure 4 illustrates an embodiment of the method of the present disclosure performed, for instance, in the System on Chip illustrated by figure 3;
- Figure 5 illustrates a logical structure of the communication device 120 of figure 1;
- Figure 6A and 6B illustrates examples of state machines defining several operating states of the System on Chip equipping the communication device 120 of the present disclosure and transition conditions between those operation states;
- Figure 7 illustrates a logical structure of the TV Set 103 of figure 1.

It is to be noted that the drawings illustrate exemplary embodiments and that the embodiments of the present disclosure are not limited to the illustrated embodiments.

### 5. Detailed description of the embodiments.

The present disclosure proposes a way of helping limiting the power consumption of an electronic device.

In some situations, a way of increase the processing capabilities of an electronic device can be to equip the electronic device with a Central Processing Unit (CPU) working at an increased frequency. Indeed, a CPU with high frequency will process more software instructions than a CPU with low frequency in a same period of time.

Furthermore, Hardware designers can also incorporate several cores to a Central Processing Unit (CPU) in an electronic device in order to increase the processing performances. Such solution notably permits to perform several software tasks, or several software processes, in parallel, or to share a workload between several resources.

However, the number of cores of a CPU and the operating frequency of a CPU can have an impact of this power consumption.

Power consumption is a major issue for many devices. Indeed, national regulation often states requirements regarding maximum limits of power consumption. Furthermore, some power consumption issues can be derived from the electronic device itself. Notably, electronic devices are becoming smaller and smaller, leading to an increased sensitivity, in terms of heat variation, to their power consumption. This behavior can represent a risk of damaging the electronic devices. This is notably the case of complementary devices (sometimes called dongle or stick) that can be mounted on a device in order to provide some extra or complementary capabilities to the device. As such devices often have a very small form factor, their power consumption is a critical issue and they require to be operated at a low power consumption.

At least one embodiment of the present disclosure involves a way of powering an electronic device comprising at least two processor cores, like a complementary device, that permits to help controlling the power consumption of the device.

Some embodiments of the present disclosure can be applied to an electronic device comprising a unique processor (also called herein Central Processing Unit) comprising several independent processing units (or cores), each core being adapted to execute program instructions. Such a processor is also known as a multi-core processor. Other embodiments of the present disclosure can be applied to an electronic device comprising several distinct processors, each processor comprising a single core, or to an electronic device comprising several distinct multi-core processors.

At least some embodiments of the present disclosure propose to vary the number of processor cores used and the frequency used for operating at least one of those processor cores according to the load of at least one of the used processor cores.

Indeed, some technologies (known as Dynamic Voltage and Frequency Scaling (DVFS) technologies have been developed in order to permit to adapt dynamically a CPU frequency in order to match the needs of software components of an electronic device.

However, such technics are sometimes based on a very complicated predictive algorithm, and thus are not adapted to a small and cheap device. Other technics are so rudimentary that they are not able to address the need of a particular electronic device. Notably, in the field of audio and/or video processing, the need of an electronic device, in terms of processing capabilities, can vary greatly upon the time. For instance, some software tasks (like video decoding) performed by a video processing device can be very greedy in terms of processing resources, but are only executed during a limited time. For such devices, there is a need for a simple solution adapted to high variations of consumption of processing resources.

Thus, at least some embodiments of the present disclosure offer a DVFS implementation solution being much simpler than solutions using for instance a very complicated load predicting algorithm while being more efficient than some rudimentary solutions, like using simply a mean load value calculated amongst all used processor cores.

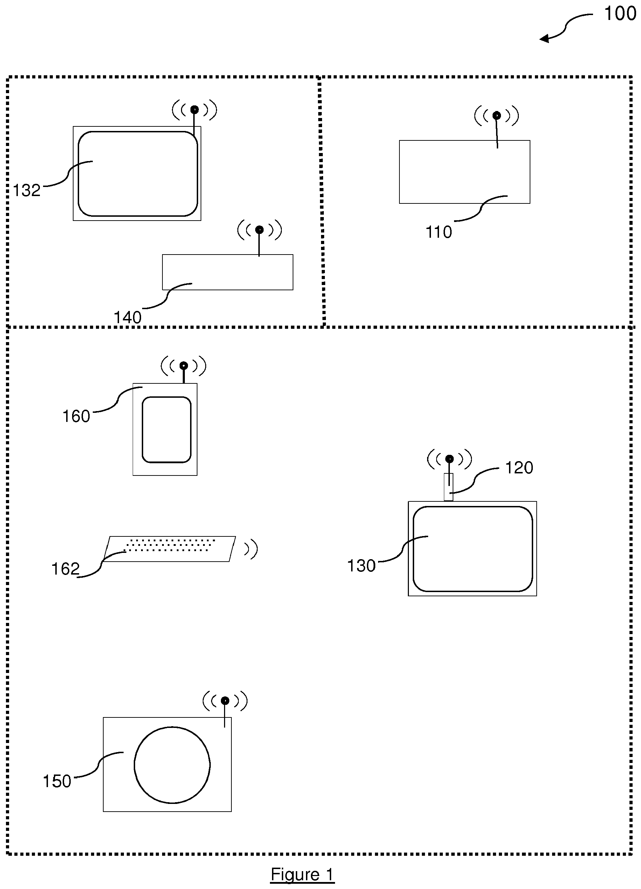

A particular embodiment is now described, in reference to a communication system 100 illustrated by figure 1.

In the embodiment illustrated by figure 1, the communication system 100 is located in a local or domestic environment that encompasses communication devices, for processing (for instance acquiring, receiving, transmitting and/or rendering) an audio and/or video content. Such communication devices can include inter-communication devices (like gateways or repeaters), and end-devices like set-top-boxes (STB), smartphones, tablets, personal computers or peripherals like speakers (or audio renderers) or microphones that have become widely used nowadays.

The communication devices of the system can exchange data inside a communication network, for instance a local area network (LAN), thanks to wired communication interfaces (like Ethernet interface) and/or wireless communication interfaces, like WIFI® or Bluetooth® interfaces.

The communication system can notably comprise one or several gateway(s) 110, giving access to at least one other communication network, like a Wide Area Network (WAN). Notably, the gateway 110 can give access to a Broadcast Network or to a Broadband Network, like the Internet Network. For instance, it can receive and/or transmit data from a broadcast network (for instance from TV operators) or from/to a broadband network like Internet. Thus, the devices of the system 100 can receive and/or transmit data, notably audiovisual data, via the gateway, from/to those other communication networks.

The communication system 100 can also include at least one other communication device, notably a communication device adapted to process an audiovisual signal, like a Set Top Box (STB) 140, a tablet 160, a PC, a smartphone, a Blue-ray player, a TV Set (130, 132), an/or an audio renderer 150.

In the embodiment illustrated in figure 1, the system can be distributed in different rooms of the local or domestic environment. For instance, the system can comprise a gateway (GW) 110 located in a first room, a first TV set 132 and a Set Top Box 140 located in a second room, and a second TV Set 130 located in a third room. The TV Set 130 can for instance be equipped with a complementary device 120, for instance a peripheral device comprising audio and/or video processing capabilities (like HDMI capabilities) and/or wireless communication capabilities. Notably, as in the illustrated embodiment, the wireless communication interfaces of the peripheral device can be adapted to the reception and/or the transmission of an audio and/or video stream.

The complementary device 120 can notably be adapted to provide technical features like video processing, to a user.

For instance, the complementary device 120 can be adapted to communicate with the gateway 110, in order to acquire a video stream from a Network external to the LAN network (for instance a video stream from the Internet or from a Video-On-Demand (VOD) site of a private Network). The complementary device can also acquire a video stream from the STB 140, for instance a video stream stored locally on the STB or a video stream resulting from a decoding by the STB 140 from an encoded video stream received from the gateway 110. The complementary device 120 can transmit the video stream to the TV Set 130 for its rendering.

In some embodiments, the complementary device 120 can transmit wirelessly an audio stream (or an audio component of an audiovisual stream) to one or several audio processing devices, like an audio rendering device 150 as illustrated by figure 1. Of course, the figure has also an exemplary purpose and in some embodiments, the peripheral device 120 can transmit different audio streams to different audio processing devices.

Video processing, notably high definition video processing, can be very memory and Central Processing Unit (CPU) intensive.

In the particular embodiment of figure 1, the complementary device 120 (also called herein "dongle", or "peripheral" device) is associated with the main device via a wired connection. For instance, it can be mounted on a communication port of the TV Set. The complementary device 120 can use the communication port for exchanging data with the main device and also for its operating power.

Such a communication port can be notably a port compliant to a standard communication interface like a USB interface or an HDMI interface.

The complementary device 120 can be controlled by a user, either directly or through the TV Set, thanks to a remote-control device 162 or to an application running on a tablet 160.

In the embodiment illustrated in figure 1, the communication device 120 is an HMDI dongle. When used as a secondary set top box, coupled to a TV set 130, the HDMI dongle (or stick) is often running only one main process, in charge of video reception and decoding. Such a process (which can be executed by one of the several processor cores) can require high power. However, as the form factor of the dongle is very small, it is important that the power consumption remains relatively low. Thus, a solution for controlling the power consumption of the HDMI dongle while offering powerful processing capabilities is needed.

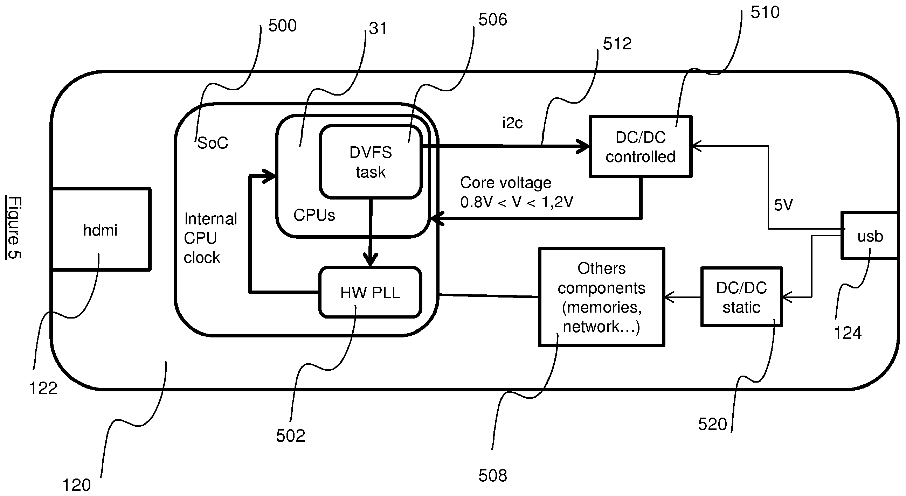

Figure 5 describes the structure of an electronic device (herein a communication device) adapted to implement the method of the present disclosure. It can be for instance a wireless communication device, like the HDMI dongle illustrated by figure 1.

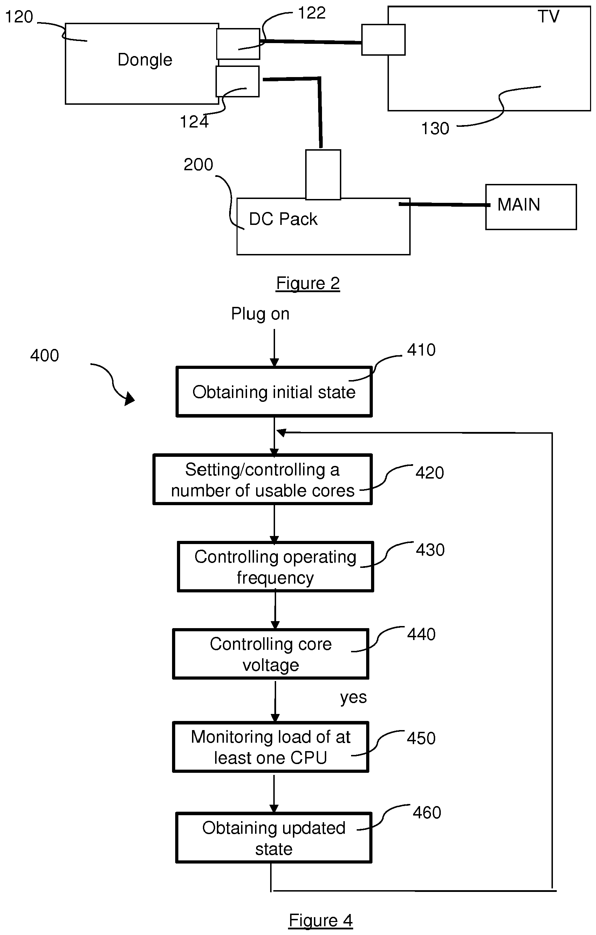

In the particular embodiment illustrated, the electronic device is a communication device 120 comprising at least two communication ports: a first communication port 122 (for instance an HDMI port) that can permit to the peripheral device 120 to exchange video data with another device (for instance, as illustrated by figure 2 with the TV Set 130) and a second communication port 124 can permit the powering of the peripheral device 120. Depending on the configuration of the system, the peripheral device 120 can be powered, via the second communication port 124, either by the TV Set 130 or by a DC power adaptor 200, for instance a power plug linked to the Main as illustrated by figure 2. In a variant, the DC power adaptor connected to the communication interface can further enable communication with another device of the network, via an Ethernet communication interface for instance. The communication port 124 can be a standard communication port, for instance an USB communication port. Of course, depending upon embodiments, different types of communication ports can be used. In the particular embodiment of figure 5, the communication device 120 can include different components (or modules), linked together via a data and address bus, which can also carry a timer signal.

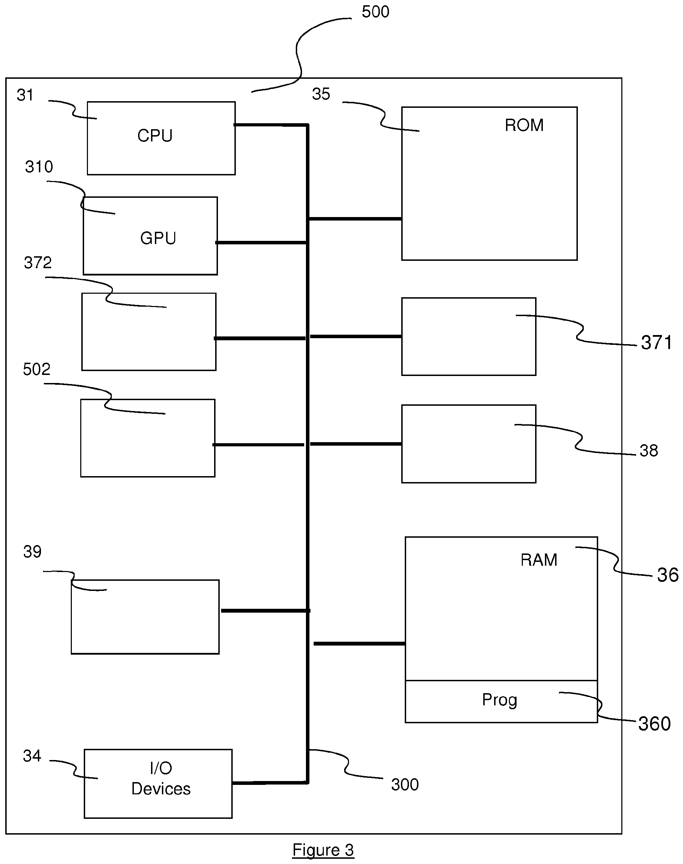

In the particular embodiment of figure 5, the communication device also comprises a Smart Component being a System on Chip (SoC) Unit 500. The structure of the SoC 500 is detailed herein after in link with figure 3. The communication device 120 further comprise at least one Direct Current / Direct Current (DC/DC) Controlled Component 510 dedicated to delivering voltage to the SoC and a DC/DC static component 520 in charge of delivering voltage to other components of the communication device 120. Those other components (collectively represented by element 508 in figure 5) can notably include memories (for instance at least one Read Only Memory (ROM) memory like a Flash memory, at least one Random Access Memory (RAM) memory like a Double Data Rate (DDR) RAM memory), one or several Input and/or Output Interfaces (like a tactile display, a switch, a led, a button, and so on), one or several Network Interfaces and so on...

In the illustrated embodiment, the voltage delivered by the DC/DC controlled component can be dynamically modified by the SoC by means of at least one command sent by the SoC to the DC/DC controlled component though a bus 512. Such a bus can be a digital bus, like an Inter-Integrated Circuit (I²C) bus, or an analog bus, like an analog bus adapted to convey Pulse-width modulation (PWM) or pulse-duration modulation (PDM) command messages.

Figure 3 illustrates the functional structure of the SoC, in an exemplary embodiment. The SoC 500 can include different devices (or modules), linked together via a data and address bus 300, which can also carry a timer signal. It can include one or several micro-processors 31, 310 (or Central Processing Units (CPU)), for instance a Graphic Processing Unit (GPU) 310 (Optional) and a frequency generating Unit 502 (for instance a Hardware (HW) Component like a Hardware Phase Lock Loop (HW PLL)), in charge of generating the frequency of the clocks used by at least some of the components of the SoC 500 and notably the CPU 31, 310 of the SoC 500. In some embodiments of the present disclosure, the SoC can comprise a unique processor comprising several cores, each operating at a same frequency. For instance, in the illustrated embodiment, the SoC is equipped with a CPU comprising 4 cores. In others embodiments of the present disclosure, the SoC can comprise several distinct processors, each processor comprising a single core or several cores. In such embodiments, at least two of the processors can operate at a same frequency and/or at different frequencies.

In the illustrated embodiment, the SoC 500 comprises a single processor equipped with several cores, each core accessing independently from the other(s) to the memory (or memories) of the SoC.

The SoC can also include at least one Input/ Output module 34, a ROM (or « Read Only Memory ») 35, a RAM (or « Random Access Memory ») 36, wired communication interface(s) (38, 39). One of the wired interface(s) can for instance be an HDMI interface, enabling reception and/or transmission of video data via the HDMI communication port 122 of the dongle, or an USB interface, enabling powering of the dongle via an USB communication port 124 of the dongle. In the illustrated embodiment, the USB interface can be for instance an interface compatible with a standard like USB 2.0 or USB 3.0.

In the illustrated embodiment, the complementary device can also comprise at least one communication interface 371, 372 (like WIFI or Bluetooth® interfaces), configured for the reception and/or transmission of data via a wireless connection.

Those communication interfaces are optional in some embodiments.

Each of the mentioned memories can include at least one register, that is to say a memory zone of low capacity (a few binary data) or high capacity (with a capability of storage of a whole program or of all or part of data representative of data to be calculated or displayed). The ROM notably comprises program code instructions for performing at least one embodiment of the method 400 described herein.

When the electronic device 120 is powered on, for instance via the communication port 124, by a power source (like the TV Set 130 or an independent power plug 200 as illustrated by figure 2) external to the peripheral device, the DC/DC controller powers the SoC 500.

At least one of the cores of the micro-processor 31 loads the program instructions in at least one register 360 of the RAM 36, notably the program code instructions corresponding to the DVFS task 506 illustrated by figure 5 and performing at least one embodiment of the method 400 described herein. Then at least one of the core(s) of the processor 31 executes the DVFS task 506.

According to a variant, the power source can be included in the electronic device 120. According to a variant, the SoC 500 includes several processors.

The SoC 500 of the complementary device 120 of the system 100 is adapted to implement the method 400 of the present disclosure, in one of its embodiments.

In the particular embodiment illustrated in figures 3 and 5 at least one of the cores of the processor (or microprocessor)31, 310 can be configured to:
vary a maximum number of processor cores used for operating the electronic device, amongst the processor cores of the electronic device, and/or the operating frequency of at least one of said processor cores according to the load of at least one of the processor cores.

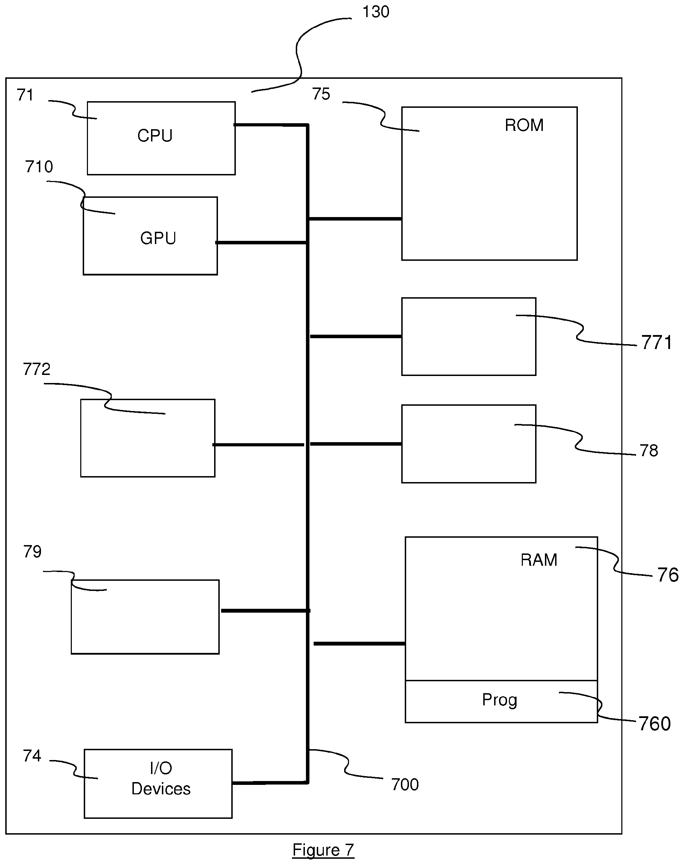

Figure 7 illustrates the structure of an electronic device like the TV set 130 illustrated by figure 1, on which the electronic device 120 can be mounted, thus constituting an electronic assembly. In the particular embodiment of figure 7, the electronic device 130 can include different devices (or modules), linked together via a data and address bus 700, which can also carry a timer signal. It can include one or several micro-processors 71, 710 (or Central Processing Units (CPU)), for instance a Graphic Processing Unit (GPU) 710 (Optional)

The electronic device 130 can also include at least one Input/ Output module 74, a ROM (or« Read Only Memory ») 75, a RAM (or Random Access Memory ») 76, wired communication interface(s) (78, 79). One of the wired interface(s) can for instance be an HDMI interface, enabling reception and/or transmission of video data via the HDMI communication port of the TV Set 130, or an USB interface, enabling powering of the dongle via an USB communication port 124 of the dongle. In the illustrated embodiment, the USB interface can be for instance an interface compatible with a standard like USB 2.0 or USB 3.0.

In the illustrated embodiment, the electronic device 130 can also comprise at least one communication interface 771, 772 (like WIFI or Bluetooth® interfaces), configured for the reception and/or transmission of data via a wireless connection.

Those communication interfaces are optional in some embodiments.

Each of the mentioned memories can include at least one register, that is to say a memory zone of low capacity (a few binary data) or high capacity (with a capability of storage of a whole program or of all or part of data representative of data to be calculated or displayed).

When the electronic device 130 is powered on, the CPU 71 loads program instructions stored in the ROM 75 in at least one register 760 of the RAM 76.

The electronic device 130 can also comprise a power source.

**Figure 4** shows a particular embodiment of the method 400 of the present disclosure, implemented in the SoC 500 of the electronic device 120 of figures 1 and 5 by the DVFS task 506 in order to limit the power consumption of the SoC 500 and thus of the electronic device. The DVFS task manages the processor frequency and voltage control, for optimizing the Software performance and the power consumption of a processor.

According to the illustrated embodiment in Figure 4, upon the powering up of the electronic device 120 (for instance by the plugging of the electronic device 120) and thus the powering up of the SOC 500, the method 400 can comprise obtaining 410 an initial operating state relating to the processor cores of the SoC 500. The initial operating state can notably define initial values of variables defining a maximum number of cores to allowed to be used (or in others words usable or operative), amongst the cores equipping the SoC, for operating the electronic device. This maximum number can notably by less than the number of cores equipping the SoC. The initial state can also define an operating frequency of each usable CPU core. In the particular embodiment described, where all cores belong to the same CPU, the initial value of the operating frequency can be the same for all of the usable CPU cores. In other embodiments, the operating frequencies can differ upon the cores. In some embodiments, the initial state can also comprise identifiers of the cores and/or of the CPU that are allowed to be used.

Depending on the embodiments, the initial state of the cores can be obtained differently. For instance, in the illustrated embodiment in Figure 4, the obtaining can comprise accessing a configuration table stored in a memory (like the ROM 35 or the RAM 36 of the SoC). In a variant, it can be stored in a storage medium accessible locally or remotely by the communication device 120. For instance, it can be stored on a memory of the electronic device, outside the SoC or in a memory card readable from the electronic device or on an external device linked to the electronic device via a wired or a wireless communication port of the electronic device. In other embodiments, the obtaining can comprise acquiring an initial number of cores allowed to be used and/or the operating frequency of each usable core through a user interface of the electronic device.

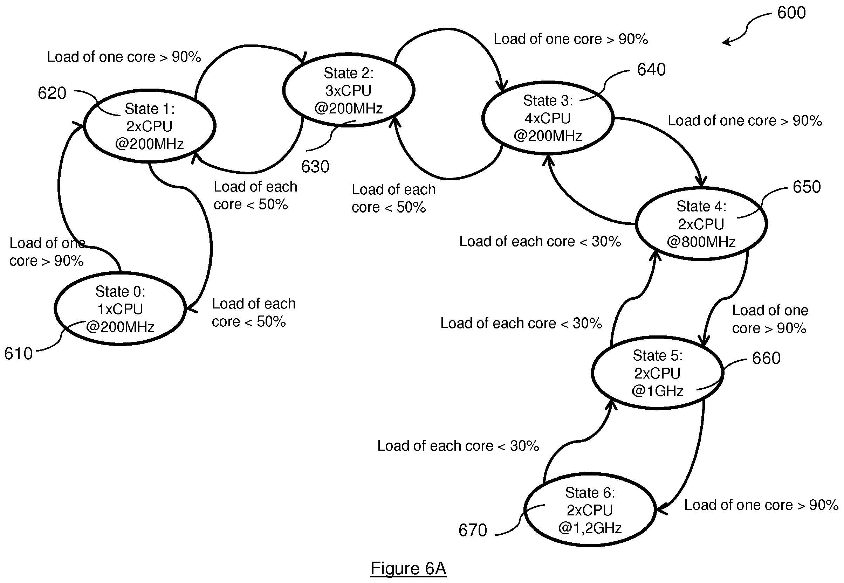

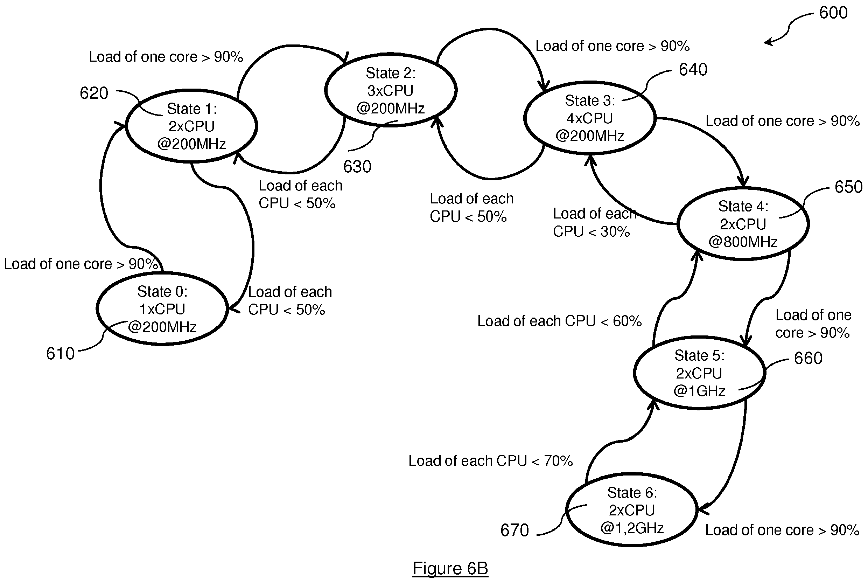

In the illustrated embodiment, the method is implemented thanks to a state machine 600, describing different states of the processor cores (notably their usability and their operating frequency) and the condition for moving from one state to another. Example of state machines 600 are illustrated by figures 6A and 6B. Of course, the number of states and/or condition(s) for a transition between two states can vary upon embodiments. In the illustrated examples, 7 states are defined. A varying number of operative cores allowed to be used and a varying operating frequency of the CPU are associated to each state. The number of operative cores (or in other words the number of cores being allowed to be used for operating the electronic device) can vary, amongst the states, from 1 (where a single core is used) to a value equal to the total number of cores of the SoC (for instance 4 in the illustrated embodiments).

For instance, in the state machines of figure 6A and 6B:
- "State 0" 610 corresponds to a single core being usable for operating the electronic device, the single core operating at a frequency of 200 MHz;
   In State "0", only one core, amongst the 4 cores quipping the SoC, can be used for operating the dongle.
- "State 1" 620 corresponds to a maximum number of two cores being usable for operating the electronic device, both cores operating at a frequency of 200 MHz;
   In the illustrated example (where the SoC is equipped with 4 cores) only two cores amongst the 4 cores of the SoC can be used concurrently in state "1" to operate the dongle.
- "State 2" 630 corresponds to a maximum number of three cores being usable for operating the electronic device, the three cores operating at a frequency of 200 MHz;
- "State 3" 640 corresponds to a maximum number of four cores being usable for operating the electronic device, the four cores operating at a frequency of 200 MHz (the four cores representing in the illustrated embodiment the total number of cores of the SoC);
- "State 4" 650 corresponds to a maximum number of two cores that can be used at the same time for operating the electronic device, the two cores operating at a frequency of 800 MHz;
- "State 5" 660 corresponds to a maximum number of two cores that can be used at the same time for operating the electronic device, the two cores operating at a frequency of 1000 MHz;
- "State 6" 670 corresponds to a maximum number of two cores that can be used at the same time for operating the electronic device, the two cores operating at a frequency of 1200 MHz.

In other embodiments, for instance in embodiments where the SoC comprises several CPU, a number of operative cores and an operating frequency of each core can be associated to each state.

In the illustrated embodiment, the initial state of the cores is one of the states of the state machine 600. In some embodiments, the initial state can be the less powerful state (for instance state "0") of the state machine 600, in other embodiments, as in the illustrated embodiments it can be the most powerful one for instance state "6"). Such an embodiment helps ensure a more efficient start of the electronic device and improves a user experience of a user of the electronic device. In still other embodiments, the initial state can be a medium state, being neither the state with the highest power consumption nor the state with the lowest power consumption of the state machine.

In the illustrated embodiments, once the initial state has been obtained, the method can also comprise controlling 420 the maximum number of cores allowed to be used concurrently, amongst to total number of cores present in the SoC, by a process scheduler of the SoC for operating the communication device..

According to figure 4, the method can also comprise controlling 430 the voltage applied to the cores by sending a command to the DC/DC module 510 and/or controlling 440 the operating frequency of the cores by sending a command to the HW PLL module 502 according to the obtained state (herein the initial state) of the cores.

Indeed, the operating frequency of a processor (and thus of its cores) has an impact of its power consumption. Thus, depending of the operating frequency, a processor needs to be powered with different voltages. For instance:
- for a frequency being less than 800 MHz, a voltage of 0,8V can be applied to the CPU;
- for a frequency belonging to the range [800 MHz; 1000MHz], a voltage of 0,9V can be applied to the CPU;
- for a frequency belonging to the range [800 MHz; 1000MHz], a voltage of 1,0V can be applied to the CPU;
- for a frequency being equal or more than 1200 MHz, a voltage of 1,1 V can be applied to the CPU.

In order to assure a delivering of enough voltage for the operation of the processor, when the operation frequency is to be increased, the controlling of the DC/DC controller (for increasing the voltage applied to the processor) is performed before the controlling of the HW PLL (for increasing the operating frequency of the CPU). The opposite sequence occurs when the operation frequency is to be decreased. That is the controlling of the HW PLL (for decreasing the operating frequency of the processor) is performed before controlling of the DC/DC controller (for decreasing the voltage applied to the processor).

The method can also comprise monitoring 450 the load of at least one core of the SoC. In the embodiment illustrated, the method comprises monitoring the load of each core that is currently usable for operating the electronic device. As an example, if the cores are numbered with integer values from 0 to n, the cores being used sequentially according to their number, with the maximum number of cores allowed to be used concurrently for operating the electronic device being currently set to l (l <= n), then the load of the core numbered from 0 to (l-1) are monitored. This monitoring can notably be performed periodically, with a period belonging to a range of several tens to several hundreds of milliseconds, for instance a range like [50 ms; 150 ms], like a period of 70 ms, 100 ms, or 120 ms. The monitoring 440 can notably to performed at a kernel level. For instance, the load of a core can be estimated as being a ratio between a duration where a core is operating during a monitoring period and the monitoring period itself (or in other words the percentage of time the core is operating during the monitored period).

In the illustrated embodiment, the method can comprise obtaining 460 an updated state. Obtaining an updated state can be performed similarly to the obtaining of the initial state (for instance by accessing a configuration table defining all the possible states of the dongle (and notably for each state the maximum number of processor cores allowed to be used concurrently for operating the electronic device and the operating frequency of each processor used) and at least one transition condition between those states). In the illustrated embodiment, the updated state is a function of the load values resulting from the monitoring and of their matching with the transition conditions associated to the states (notably the current state) of the state machine. Several transition conditions can be associated to a state, each transition condition being exclusive regarding the others or the transition conditions being evaluated successively (for instance in a determined order to according to some priority criteria). For instance, according to the exemplary embodiment of figure 6A, a first condition for a transition between a first state 620 to a second state 630 (where the electronic device is consuming more power than in the first state 620) is a load value of each of the processor cores being equal and/or above a first value. A second condition for a transition between the first state 620 to a third state 610 (where the electronic device is consuming less power than in the first state 620) is a load value of all of the processor cores being equal and/or below a second value (for instance a value lower than the first value).

Such an embodiment can help for instance provide a powerful configuration of the cores when an application is launched while also helping provide a configuration of the cores corresponding to a limited power consumption when a video decoding is on-going, and an efficient low power mode configuration of the cores when the processor is not performing a specific task.

In some embodiments, only one transition from a current state can be performed for obtaining an updated state. Such an embodiment can ensure smooth variation of the processing capabilities of the electronic device. In other embodiments, obtaining an updated state can involve several transitions between successive states. For instance, during the obtaining, transitions from successive states, associated with increased power consumption, can be performed until no transition to a more powerful state is possible (due to the transition conditions from the last reached state not being met). Or during the obtaining, transitions from successive states, associated with decreased power consumption, can be performed until no transition to a less powerful state is possible (due to the transition conditions from the last reached state not being met). Such an embodiment can ensure rapid adaptation of the processing capabilities of the electronic device to the need of its components. Of course, in some embodiments, obtaining an updated state can involve several transitions between successive states of increased power consumption and only one transition between a current state to a less powerful state. Such an embodiment can ensure rapid adaptation to increased need of the processing capabilities while ensuring smooth variation, not noticeable for a user, of the processing capabilities of the electronic device the need of the processing capabilities decrease.

Depending of the embodiments, or depending of the configuration of the electronic device, the first and/or the second value can differ. For instance, the first value can be set to 70, 80, 90, or 95 % (for a maximum value of Core load of 100%) and the second value can be set to 20, 30, 40, 50% (for a maximum value of core load of 100%).

The first and/or second value can notably differ upon the states (as illustrated by figure 6B) of be the same for each state (as illustrated by figure 6A).

According to the illustrated embodiment, the method comprises modifying 420 the number of cores being usable (or allowed to be used concurrently or in parallel) for executing the software processes scheduled to be performed by the SoC, modifying 430 the operating frequency of the processor, and/or modifying 440 the voltage applied to the processor according to the obtained state (similarly to what has already been described above). The modifying can notably imply increasing the maximum number of CPU cores usable and/or increasing the operating frequency of at least one of the usable core for a transition to a more powerful (faster) state and, at the opposite, decreasing the maximum number of processor cores usable and/or decreasing the operating frequency of at least one of the usable core for a transition to a less powerful (slower) state.

In the illustrated embodiment, the operating frequency of each of the cores is the operating frequency of the processor as all cores belongs to the same processor.

In some embodiments, the states and/or the transition conditions of the state machine are defined so as to increase preferentially the number of usable cores (or in other words to increase the number of usable cores until the total number of processor cores equipping the SoC is reached), before increasing the operating frequency of at least one of the usable core and to decrease the operating frequency of at least one of the usable cores before decreasing the number of usable cores.

The present disclosure has been described in relation with a particular protocol. Of course, as it can be understandable for a person skilled in the art, the present disclosure can also be applied in a communication system using other communication protocols, notably a communication protocol not related to USB or HDMI standards and/or bus protocols other than l²C, PWM and/or PDM protocols.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. A method implemented in an electronic device comprising at least two processor cores, said method comprising varying a maximum number of processor cores used for operating said electronic device, amongst said processor cores, and/or an operating frequency of at least one of said processor cores according to a load of at least one of said processor cores.

2. The method of claim 1 comprising varying said maximum number of used processor cores and/or the operating frequency of at least one of said processor cores according to the load of each used processor cores.

3. The method of any of claims 1 to 2 comprising increasing said maximum number of used processor cores and/or the operating frequency of at least one of the used processor cores when the load of at least one of said used processor cores is more than a first value.

4. Method according to claim 3 wherein said varying of said maximum number of used processor cores and/or the operating frequency of at least one of said used processor cores comprises, when the load of at least one of said used processor cores is more than the first value, keeping the operating frequency of at least one of said used processor cores unchanged when said maximum number of used processor cores is less than the total number of processor cores of said electronic device.

5. The method according to claims 1 to 4 comprising decreasing said maximum number of used processor cores and/or the operating frequency of at least one of said used processor cores when the load of at least one of said used processor cores is less than a second value.

6. Method according to claim 5 wherein said varying of said maximum number of used processor cores and/or the operating frequency of at least one of said used processor cores comprises, when the load of at least one processor core is less than the second value, keeping said maximum number of used processor cores unchanged when at least one of the used processor cores is adapted to operate at a frequency lower than its current operating frequency.

7. The method of any of claims 3 to 6 wherein the first and/or the second value depends of said maximum number of used processor cores and/or of the current operating frequency of at least one of the currentlyused processor cores.

8. A System on Chip (SoC) Component comprising at least two processor cores, said at least two processor cores being adapted to collectively vary a maximum number of processor cores used for operating said System on Chip, amongst said processor cores, and/or an operating frequency of at least one of said processor cores according to a load of at least one of said processor cores.

9. An electronic device comprising a SoC Component comprising two processor cores, said at least two processor cores being adapted to collectively vary a maximum number of processor cores used for operating said System on Chip, amongst said processor cores, and/or an operating frequency of at least one of said processor cores according to a load of at least one of said processor cores.

10. The electronic device according to claim 9, wherein said at least two processor cores are adapted to collectively vary a maximum number of processor cores used for operating said electronic device, amongst said processor cores, and/or the operating frequency of at least one of said processor cores according to the load of each used processor core.

11. The electronic device of claim 9 or 10 wherein said at least two processor cores are adapted to collectively increase said maximum number of processor cores and/or the operating frequency of at least one of the processor cores when the load of at least one for said used processor cores is more than a first value.

12. An electronic assembly comprising:
- a first electronic device;
- a second electronic device adapted to equip said first electronic device, said second electronic device comprising a SoC Component comprising at least two processor cores, said at least two processor cores being adapted to collectively vary a maximum number of processor cores used for operating said System on Chip, amongst said processor cores, and/or an operating frequency of at least one of said processor cores according to a load of at least one of said processor cores.

13. The electronic assembly of claim 12 wherein said at least two processor cores being adapted to collectively vary a maximum number of processor cores used for operating said electronic device, amongst said processor cores, and/or the operating frequency of at least one of said processor cores according to the load of each used processor core.

14. A non-transitory computer readable program product comprising program code instructions for performing, when said non-transitory software program is executed by a computer, a method implemented in an electronic device comprising at least two processor cores, said method comprising varying a maximum number of processor cores used for operating said electronic device, amongst said processor cores, and/or an operating frequency of at least one of said processor cores according to a load of at least one of said processor cores.

15. Computer readable storage medium carrying a software program comprising program code instructions for performing, when said non-transitory software program is executed by a computer, a method implemented in an electronic device comprising at least two processor cores, said method comprising varying a maximum number of processor cores used for operating said electronic device, amongst said processor cores, and/or an operating frequency of at least one of said processor cores according to a load of at least one of said processor cores.
